# EUROPÄISCHE PATENTANMELDUNG

(11) **EP 4 275 944 A1**
(43) Veröffentlichungstag der Anmeldung: **15.11.2023**
(21) Anmeldenummer: 23172122.6
(22) Anmeldetag: 08.05.2023
(51) Int. Cl.: B60L 5/39

(54) **STROMABNEHMER FÜR EIN FAHRZEUG**

(30) Priorität: 12.05.2022 AT 503402022
(71) Anmelder: Siemens Mobility Austria GmbH, 1210 Wien (AT)
(72) Erfinder: Preiss, Mario, 8184 Anger (AT)
(74) Vertreter: Siemens Patent Attorneys

(57) **Zusammenfassung**

Die Erfindung betrifft einen Stromabnehmer für ein Fahrzeug mit einer Betätigungsvorrichtung (1), mit einem mit einem Fahrzeug verbindbaren ersten Träger (2) sowie mit einem beweglich mit dem ersten Träger (2) verbundenen, an eine Stromversorgungseinrichtung (4) anlegbaren Gleitstück (5), wobei zwischen dem Gleitstück (5) und dem ersten Träger (2) zumindest eine erste Anschlagsanordnung (18) mit zumindest einem Anschlag (20) zur Begrenzung von Auslenkungen des Gleitstücks (5) angeordnet ist, und wobei die zumindest erste Anschlagsanordnung (18) einen Antrieb (21) zur Verstellung des zumindest einen Anschlags (20) umfasst. Es wird vorgeschlagen, dass der Antrieb (21) mit einem Fahrzeugsteuergerät (31), in welchem ein Computerprogrammprodukt (35) implementiert ist, welches zur Bildung von Einstellbefehlen zur Anpassung von Positionen des zumindest einen Anschlags (20) mittels des Antriebs (21) eingerichtet ist, verbindbar ist.

Dadurch wird ein besonders sicherer Kontakt zwischen dem Gleitstück (5) und der Stromversorgungseinrichtung (4) ermöglicht.

## Beschreibung

Die Erfindung betrifft einen Stromabnehmer für ein Fahrzeug, insbesondere für ein Schienenfahrzeug, mit einer Betätigungsvorrichtung, mit einem mit einem Fahrzeug verbindbaren ersten Träger sowie mit einem beweglich mit dem ersten Träger verbundenen, an eine Stromversorgungseinrichtung anlegbaren Gleitstück, wobei zwischen dem Gleitstück und dem ersten Träger zumindest eine erste Anschlagsanordnung mit zumindest einem Anschlag zur Begrenzung von Auslenkungen des Gleitstücks angeordnet ist, und wobei die zumindest erste Anschlagsanordnung einen Antrieb zur Verstellung des zumindest einen Anschlags umfasst.

Stromabnehmer, deren Gleitstücke mit Stromversorgungseinrichtungen wie z.B. Stromschienen in Verbindung gebracht werden, um Fahrzeuge mit Elektrizität zu versorgen, müssen von den Stromversorgungseinrichtungen trennbar ausgeführt sein, um das Fahrzeug von dessen Versorgung mit Elektrizität trennen zu können. Für eine Durchführung von Anlegevorgängen der Stromabnehmer an die Stromversorgungseinrichtungen und Trennvorgängen der Stromabnehmer von den Stromversorgungseinrichtungen sind häufig Betätigungsvorrichtungen der Stromabnehmer vorgesehen. Zur Ermöglichung einer verlässlichen Stromabnahme ist ein sicherer Kontakt zwischen den Gleitstücken und den Stromversorgungseinrichtungen bedeutsam. Weiterhin ist es bei beabsichtigten Trennvorgängen der Stromabnehmer von den Stromversorgungseinrichtungen wichtig, dass die Gleitstück am Ende der Trennvorgänge einen vorgesehenen Abstand zu den Stromversorgungseinrichtungen verlässlich einhalten.

Aus dem Stand der Technik ist die EP 3 587 165 A1 bekannt, in welcher ein Stromabnehmer für ein Fahrzeug mit einem Stromabnehmerarm und einem mit dem Stromabnehmerarm verbundenen Gleitstück beschrieben ist. Das Gleitstück kann mittels einer Betätigungsvorrichtung an eine Stromschiene angelegt oder von dieser getrennt werden. Die Betätigungsvorrichtung weist Wellen, eine Hebelvorrichtung sowie eine Stange auf, wodurch ein in die Betätigungsvorrichtung zur Betätigung des Stromabnehmerarms eingeleitetes Drehmoment umgelenkt werden kann.

Weiterhin zeigt die WO 2019/158507 A1 einen Stromabnehmer, welcher gefedert mit einem Fahrzeug verbunden ist. Ein Schleifschuh des Stromabnehmers ist gefedert mit einem Grundrahmen des Stromabnehmers gekoppelt.

Die genannten Ansätze weisen in ihren bekannten Formen den Nachteil auf, dass keine dedizierten Mittel zur Begrenzung von Auslenkungen des Gleitstücks bzw. des Schleifschuhs ersichtlich sind.

Ferner zeigt die AT 516 478 A1 einen Stromabnehmer mit einem Schwingarm, welcher mit einem Schienenfahrzeug verbunden ist. Ein Schleifschuh des Stromabnehmers kann an eine Stromschiene angelegt werden, wobei Bewegungen des Schwingarms mittels eines Anschlags begrenzt werden. Der Anschlag ist mittels eines Aktuators positionierbar, wobei Positioniervorgänge mittels einer Steuervorrichtung gesteuert werden können.

In der DE 34 34 803 A1 ist darüber hinaus ein Stromabnehmer für ein Fahrzeug offenbart, bei welchem ein Schleifstück mittels einer Feder an eine Stromschiene gedrückt werden kann, wobei einem Grundanpressdruck aufgrund der Feder ein stromabhängiger Zusatzanpressdruck überlagert werden kann.

Der Erfindung liegt die Aufgabe zugrunde, einen gegenüber dem Stand der Technik weiterentwickelten Stromabnehmer mit einem Gleitstück anzugeben, dessen Auslenkungen präzise kontrolliert werden können.

Erfindungsgemäß wird diese Aufgabe gelöst mit einem Stromabnehmer gemäß Anspruch 1, bei dem der Antrieb mit einem Fahrzeugsteuergerät, in welchem ein Computerprogrammprodukt implementiert ist, welches zur Bildung von Einstellbefehlen zur Anpassung von Positionen des zumindest einen Anschlags mittels des Antriebs an einen Radverschleiß eines Fahrzeugs, an einen Verschleiß des Gleitstücks oder/und an eine Abmessung einer Stromversorgungseinrichtung, an welche das Gleitstück anlegbar ist, eingerichtet ist, verbindbar ist. Dadurch ist eine flexible Anpassung einer Begrenzung von Auslenkungen des Gleitstücks möglich. Ein Depot- oder Werkstattaufenthalt eines Fahrzeugs, mit welchem der erfindungsgemäße Stromabnehmer verbunden sein kann, ist zur Einstellung des Anschlags nicht erforderlich. Die flexible Begrenzung der Auslenkungen des Gleitstücks kann beispielsweise zur Kompensation von Federungsvorgängen des Fahrzeugs erfolgen. Dadurch wird beispielsweise vermieden, dass das Gleitstück aufgrund der Federungsvorgänge übermäßig stark gegen die Stromversorgungseinrichtung gedrückt wird oder unbeabsichtigt von der Stromversorgungseinrichtung abhebt. Auf aufwendige Konstruktionslösungen, welche den Stromabnehmer zwar von den Federungsvorgängen des Fahrzeugs entkoppeln, jedoch dazu führen, dass der Stromabnehmer stark beschleunigt wird (z.B. Balken, welche mit Radsatzlagern verbunden sind und auf welchen der Stromabnehmer gelagert ist), kann verzichtet werden.

Weiterhin kann die flexible Begrenzung der Auslenkungen des Gleitstücks beispielsweise zum Ausgleich von Höhenlagefehlern der Stromversorgungseinrichtung eingesetzt werden.

Durch die erfindungsgemäße Lösung wird erreicht, dass der Stromabnehmer kompakt und leicht ausgeführt sein kann. Die sichere und flexible Begrenzung von Auslenkungen des erfindungsgemäßen Stromabnehmers führt zu einer Vermeidung von unbeabsichtigten Trennvorgängen des Gleitstücks von der Stromversorgungseinrichtung und damit zu einer zuverlässigen Stromabnahme (beispielsweise auch bei sehr weich ausgelegten Federn des Fahrzeugs).

Dadurch können ferner Verschleißvorgänge von Komponenten eines Fahrzeugs sowie Änderungen von Abmessungen einer Stromversorgungseinrichtung (z.B. Höhenänderungen einer Stromschiene aufgrund von Verschleiß oder Toleranzen etc.), welche einen Abstand zwischen dem Gleitstück und der Stromversorgungseinrichtung beeinflussen können, in die Ermittlung von Positionseinstellwerte des Anschlags einbezogen werden.

Weitere vorteilhafte Ausgestaltungen des erfindungsgemäßen Stromabnehmers ergeben sich aus den Unteransprüchen.

Günstig ist es beispielsweise, wenn der Antrieb als Elektroantrieb ausgebildet ist.

Durch diese Maßnahme lässt sich eine stufenlose Einstellung von Positionen des Anschlags besonders einfach realisieren. Beispielsweise kann der Elektroantrieb einen Servo- oder Linearmotor umfassen. Derartige Elektroantriebe sind kompakt und robust und können ohne hohen Aufwand elektrisch isoliert werden.

Vorteilhaft kann es jedoch auch sein, wenn der Antrieb als Pneumatikantrieb ausgebildet ist.

Mit einem Pneumatikantrieb ist eine gestufte Einstellung von Positionen des Anschlags besonders einfach realisierbar. Beispielsweise können zwei oder mehrere Positionsstufen des Anschlags vorgesehen sein. Der Pneumatikantrieb kann beispielsweise einen pneumatischen Aktuator mit einem Zylinder und einem Kolben umfassen. Ein Pneumatikantrieb ist auch deshalb vorteilhaft, weil z.B. eine etwaige Druckluftversorgungseinrichtung eines Fahrzeugs (z.B. für eine Druckluftbremse), mit welchem der erfindungsgemäße Stromabnehmer verbunden sein kann, von dem Pneumatikantrieb mitgenutzt werden kann.

Ferner kann es auch günstig sein, wenn der Antrieb als Hydraulikantrieb ausgebildet ist.

Eine solche Maßnahme ist beispielsweise dann günstig, wenn der erfindungsgemäße Stromabnehmer in einem Fahrzeug mit einer Hydraulikausrüstung (z.B. für eine hydraulische Bremse bei einer Straßenbahn etc.) eingesetzt werden soll.

Es ist hilfreich, wenn die zumindest erste Anschlagsanordnung eine Wegmesseinrichtung aufweist.

Dadurch kann eine Positionsregelung des Anschlags umgesetzt werden.

Zur besonders präzisen Begrenzung von Auslenkungen des Gleitstücks ist es ferner günstig, wenn der zumindest eine Anschlag mittels des Antriebs stufenlos positionsverstellbar ist.

Um Beschädigungen durch ein Aufeinandertreffen des Anschlags und des ersten Trägers zu vermeiden, ist es hilfreich, wenn der erste Träger einen Kontaktbereich für den zumindest einen Anschlag aufweist.

Ein erfolgversprechendes Anwendungsgebiet für den erfindungsgemäßen Stromabnehmer wird mit einem Fahrzeug mit zumindest einem erfindungsgemäßen Stromabnehmer erschlossen, wobei ein Antrieb einer ersten Anschlagsanordnung des zumindest einen Stromabnehmers zur Einstellung von Positionen zumindest eines Anschlags der ersten Anschlagsanordnung mit einem Fahrzeugsteuergerät einstellsignalübertragend verbunden ist.

Durch Einsatz des Fahrzeugsteuergeräts zur Steuerung oder Regelung des Antriebs kann auf separate Recheneinheiten in dem Fahrzeug verzichtet werden.

Eine Vorzugslösung erhält man, wenn zwischen einem Fahrwerk des Fahrzeugs und einem Wagenkasten des Fahrzeugs eine Luftfederanordnung des Fahrzeugs angeordnet ist, welche mit dem Fahrzeugsteuergerät verbunden ist.

Durch diese Maßnahme können Einstellvorgänge des Anschlags in Abhängigkeit von Wagenkastenauflasten (statische Einfederung) des Fahrzeugs durchgeführt werden. Werte bezüglich Wagenkastenauflasten des Fahrzeugs können beispielsweise über Auslesen von Messwerten eines Drucksensors bzw. eines Druckwächters der Luftfederanordnung in dem Fahrzeugsteuergerät ermittelt und in Positionseinstellwerte des Anschlags transformiert werden.

Eine günstige Lösung wird erreicht, wenn die Luftfederanordnung zumindest ein elektronisches Luftfederventil aufweist, wobei die Luftfederanordnung über das zumindest eine elektronische Luftfederventil mit dem Fahrzeugsteuergerät verbunden ist.

Durch diese Maßnahme kann das Fahrzeugsteuergerät zur Ermittlung der Positionseinstellwerte des Anschlags je nach Bedarf flexibel auf verschiedene Luftfederparameter (z.B. Druckwerte eines Luftfederbalgs oder Winkelwerte eines Luftfedergestänges etc.) zugreifen, um beispielsweise Positionen des Anschlags an unterschiedliche Primärfederwege des Fahrzeugs anpassen zu können, wenn beispielsweise das elektronische Luftfederventil mit einer zum Ausgleich eines Primärfederwegs erforderlichen Kennlinie parametrisiert ist oder wenn eine entsprechende Parametrisierung in dem Fahrzeugsteuergerät erfolgt etc.

Eine Vorzugslösung erhält man, wenn in dem Fahrzeugsteuergerät ein Computerprogrammprodukt implementiert ist, welches zur Bildung von Einstellbefehlen zur Anpassung der Positionen des zumindest einen Anschlags mittels des Antriebs an einen Radverschleiß des Fahrzeugs, an einen Verschleiß eines Gleitstücks des zumindest einen Stromabnehmers oder/und an eine Abmessung einer Stromversorgungseinrichtung, an welche das Gleitstück anlegbar ist, eingerichtet ist.

In diesem Zusammenhang kann es günstig sein, wenn in dem Fahrzeugsteuergerät ein erster Zusammenhang zwischen dem Radverschleiß und einem Fahrweg, ein zweiter Zusammenhang zwischen dem Verschleiß des Gleitstücks und einem Fahrweg oder/und ein dritter Zusammenhang zwischen der Abmessung der Stromversorgungseinrichtung und einem Fahrweg gespeichert ist/sind.

Durch diese Maßnahmen können Verschleißvorgänge von Komponenten des Fahrzeugs sowie Änderungen von Abmessungen der Stromversorgungseinrichtung (z.B. Höhenänderungen einer Stromschiene aufgrund von Verschleiß oder Toleranzen etc.), welche einen Abstand zwischen dem Gleitstück und der Stromversorgungseinrichtung beeinflussen können, in die Ermittlung der Positionseinstellwerte des Anschlags einbezogen werden. Mittels des ersten Zusammenhangs, des zweiten Zusammenhangs oder/und des dritten Zusammenhangs kann eine Berücksichtigung des Radverschleißes, des Verschleißes des Gleitstücks oder/und der Abmessung der Stromversorgungseinrichtung in der Ermittlung der Positionseinstellwerte des Anschlags fahrwegabhängig erfolgen. Der erste Zusammenhang, der zweite Zusammenhang oder/und der dritte Zusammenhang kann/können dabei als Wertepaare (z.B. gebildet aus Verschleißwerten und Streckenpositionswerten) oder als mathematische Funktionen etc. gebildet sein.

Nachfolgend wird die Erfindung anhand von Ausführungsbeispielen näher erläutert.

Es zeigen beispielhaft:

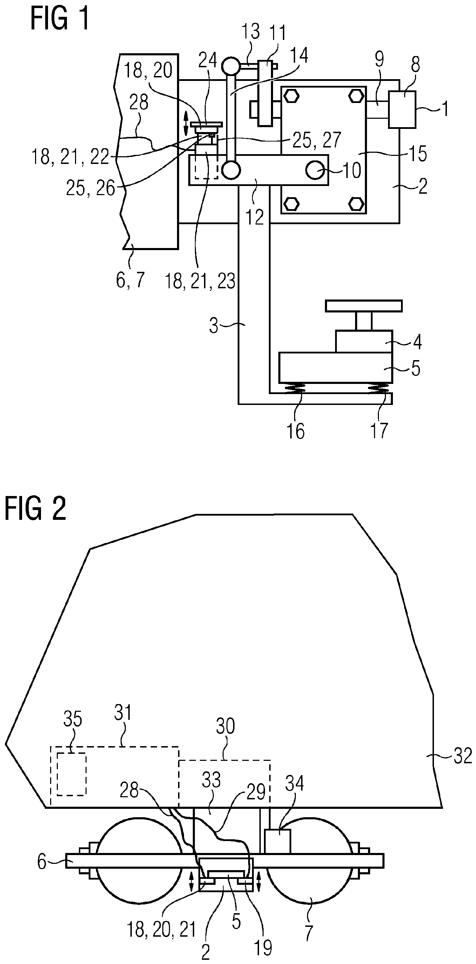

- Fig. 1:: Einen Seitenriss einer beispielhaften Ausführungsvariante eines erfindungsgemäßen Stromabnehmers mit einer motorisierten ersten Anschlagsanordnung zur flexiblen Begrenzung von Auslenkungen eines Gleitstücks, und
- Fig. 2:: Einen Seitenriss einer beispielhaften Ausführungsvariante eines erfindungsgemäßen Fahrzeugs mit einem Wagenkasten und einem Fahrwerk, bei welchem eine Luftfederanordnung, die zwischen dem Wagenkasten und dem Fahrwerk angeordnet ist, über ein elektronisches Luftfederventil mit einem Fahrzeugsteuergerät verbunden ist, wobei das Fahrzeugsteuergerät mit einem erfindungsgemäßen Stromabnehmer des Fahrzeugs verbunden ist.

Eine in Fig. 1 als Seitenriss dargestellte, beispielhafte Ausführungsvariante eines erfindungsgemäßen Stromabnehmers eines Schienenfahrzeugs umfasst eine Betätigungsvorrichtung 1, einen mit dem Schienenfahrzeug verbundenen ersten Träger 2 sowie ein beweglich mit dem ersten Träger 2 verbundenes, an eine Stromversorgungseinrichtung 4 anlegbares Gleitstück 5. Der erste Träger 2 ist fest mit einem Fahrwerksrahmen 6 eines Fahrwerks 7 des Schienenfahrzeugs, wie es beispielhaft auch in Fig. 2 dargestellt ist, verbunden.

Die Betätigungsvorrichtung 1 weist einen Adapter 8, eine erste Welle 9, eine zweite Welle 10, einen ersten Hebel 11, einen zweiten Hebel 12, einen Verbindungsbolzen 13 sowie eine Stange 14 auf. Der Adapter 8 ist mit einem in Fig. 1 nicht gezeigten pneumatischen Stromabnehmerantrieb verbunden, durch welchen der Stromabnehmer betätigt bzw. das Gleitstück 5 an die Stromversorgungseinrichtung 4 angelegt und davon getrennt werden kann. In Fig. 1 ist das Gleitstück 5 an die Stromversorgungseinrichtung 4, welche als Stromschiene ausgebildet ist, angelegt.

Mit dem Adapter 8 ist ein in Fig. 1 nicht dargestellter Handhebel koppelbar, mit welchem das Gleitstück 5 manuell an die Stromversorgungseinrichtung 4 angelegt und davon getrennt werden kann (beispielsweisen bei technischen Störungen des Schienenfahrzeugs).

Zur Übertragung von Betätigungskräften und Betätigungsdrehmomenten ist der Adapter 8 fest mit der ersten Welle 9 verbunden, wobei die erste Welle 9 drehbar in einem Wellenlager 15 gelagert ist. Das Wellenlager 15 ist mit dem ersten Träger 2 verschraubt. Der erste Hebel 11 ist fest mit der ersten Welle 9 verbunden und fungiert als Exzenter für den Verbindungsbolzen 13, welcher fest mit dem ersten Hebel 11 und gelenkig mit der Stange 14 verbunden ist. Die Stange 14 ist wiederum gelenkig mit dem zweiten Hebel 12 gekoppelt. Der zweite Hebel 12 ist über die zweite Welle 10 drehbar mit dem Wellenlager 15 verbunden. Drehachsen der ersten Welle 9 und der zweiten Welle 10 weisen einen Winkelversatz von 90° auf.

Bei einer Betätigung des Stromabnehmers rotiert der zweite Hebel 12 aufgrund seiner Kopplung mit dem Adapter 8 über die Stange 14, den Verbindungsbolzen 13, den ersten Hebel 11 und die erste Welle 9 um eine Längsachse der zweiten Welle 10. Je nach Drehrichtung des Adapters 8 kann das Gleitstück 5, welches über einen zweiten Träger 3 mit dem zweiten Hebel 12 verbunden ist, sich an die Stromversorgungseinrichtung 4 anlegen oder von der Stromversorgungseinrichtung 4 getrennt werden.

Der zweite Träger 3 ist fest mit dem zweiten Hebel 12 sowie über eine erste Gleitstückfeder 16 und eine zweite Gleitstückfeder 17 federnd mit dem Gleitstück 5 verbunden. Über den zweiten Hebel 12, die zweite Welle 10 und das Wellenlager 15 ist der zweite Träger 3 mit dem ersten Träger 2 gekoppelt.

Bei einer Betätigung des Stromabnehmers führt der zweite Träger 3 mit dem Gleitstück 5 eine Schwenkbewegung aus.

Zwischen dem Gleitstück 5 und dem ersten Träger 2 ist eine erste Anschlagsanordnung 18 mit einem Anschlag 20 zur Begrenzung von Auslenkungen des Gleitstücks 5 angeordnet.

Die erste Anschlagsanordnung 18 ist mit dem zweiten Hebel 12 und dadurch mit dem zweiten Träger 3 verbunden und weist zur Verstellung des Anschlags 20 einen Antrieb 21 auf. Der Antrieb 21 ist als elektrischer Spindelantrieb mit einem Servomotor ausgebildet. Der als Elastomerpuffer ausgebildete Anschlag 20 ist mit dem Antrieb 21 verbunden und kann mittels einer Hubspindel 22 des Antriebs 21, welche in einer Aufnahme 23 des Antriebs 21 geführt ist, angehoben und abgesenkt werden. Der Anschlag 20 ist mittels des Antriebs 21 stufenlos positionsverstellbar.

Erfindungsgemäß ist es auch denkbar, dass der Antrieb 21 als Pneumatikantrieb ausgebildet ist (beispielsweise dann, wenn eine gestufte Positionsverstellbarkeit des Anschlags 20 umgesetzt werden soll).

Weiterhin ist es vorstellbar, dass der Antrieb 21 als Hydraulikantrieb ausgebildet ist (beispielsweise dann, wenn das Schienenfahrzeug eine Hydraulikausrüstung, z.B. für eine hydraulische Bremse, aufweist).

Fig. 1 zeigt einen Zustand, in welchem der Anschlag 20 angehoben ist und ein mit dem ersten Träger 2 verbundenes Kontaktstück 24 kontaktiert.

Der zweite Hebel 12 kann sich dadurch nicht im Uhrzeigersinn verdrehen. Das Gleitstück 5 kann dadurch nicht von der Stromversorgungseinrichtung 4 ablegen. Der erste Träger 2 weist einen Kontaktbereich für den zumindest einen Anschlag 20 auf, in welchem das Kontaktstück 24 mit dem ersten Träger 2 verschweißt ist.

Um einen sicheren Kontakt zwischen dem Gleitstück 5 und der Stromversorgungseinrichtung 4 auch dann zu ermöglichen, wenn der zweite Hebel 12 und der zweite Träger 3 abweichend von jener in Fig. 1 gezeigten Lage orientiert sind, sind zwischen dem Gleitstück 5 und dem zweiten Träger 3 die erste Gleitstückfeder 16 und die zweite Gleitstückfeder 17 angeordnet. Dadurch ist das Gleitstück 5 in seiner Lage relativ zu dem zweiten Träger 3 justierbar.

Um einen sicheren Kontakt zwischen dem Anschlag 20 und dem Kontaktstück 24 auch dann zu ermöglichen, wenn der zweite Hebel 12 abweichend von jener in Fig. 1 gezeigten Lage orientiert ist, ist der Anschlag 20 elastisch verformbar ausgeführt.

Um ein Ablegen des Gleitstücks 5 von der Stromversorgungseinrichtung 4 zu ermöglichen, muss der Anschlag 20 mittels des Antriebs 21 aus dem in Fig. 1 dargestellten Zustand abgesenkt werden, sodass ein Abstand zwischen dem Anschlag 20 und dem Kontaktstück 24 gebildet wird. Der zweite Hebel 12 kann dadurch im Uhrzeigersinn rotieren, wodurch der zweite Träger 3 mit dem Gleitstück 5 in Richtung des Fahrwerksrahmens 6 ausschwenkt und das Gleitstück 5 von der Stromversorgungseinrichtung 4 ablegt.

Die erste Anschlagsanordnung 18 weist eine Wegmesseinrichtung 25 auf, wobei mit der Hubspindel 22 ein photoelektrischer Inkrementalgeber 26 und mit der Aufnahme 23 ein gerasterter Maßstab 27 verbunden ist. Dadurch können Positionen des Anschlags 20 ermittelt werden.

Um den Antrieb 21 zu steuern oder zu regeln bzw. Positionen des Anschlags 20 einzustellen, ist der Antrieb 21 über eine erste Signalleitung 28 mit einem Fahrzeugsteuergerät 31, wie es beispielhaft in Fig. 2 dargestellt ist, verbunden. Erfindungsgemäß ist es auch denkbar, dass zwischen dem Antrieb 21 und dem Fahrzeugsteuergerät 31 eine Funkverbindung vorgesehen ist.

Erfindungsgemäß ist es weiterhin vorstellbar, dass die erste Anschlagsanordnung 18 derart ausgebildet ist, dass sie nicht nur einen an die Stromversorgungseinrichtung 4 angelegten Zustand sichert, sondern beispielsweise auch eine von der ersten Stromversorgungseinrichtung 4 abgelegte Endlage des Gleitstücks 5.

In Fig. 2 ist ein Seitenriss einer beispielhaften Ausführungsvariante eines erfindungsgemäßen Fahrzeugs dargestellt. Das Fahrzeug ist als Schienenfahrzeug ausgeführt und weist einen Wagenkasten 32 und ein Fahrwerk 7 auf. Zwischen dem Fahrwerk 7 und dem Wagenkasten 32 ist als Sekundärfedereinrichtung eine Luftfederanordnung 33 angeordnet. Die Luftfederanordnung 33 weist ein elektronisches Luftfederventil 34 auf, über welches die Luftfederanordnung 33 mit einem in dem Wagenkasten 32 angeordneten Fahrzeugsteuergerät 31 verbunden ist.

Das Fahrwerk 7 weist einen erfindungsgemäßen Stromabnehmer mit einem ersten Träger 2, einem Gleitstück 5, einer motorisierten ersten Anschlagsanordnung 18 und einer motorisierten zweiten Anschlagsanordnung 19 auf. Über den ersten Träger 2 ist der Stromabnehmer mit einem Fahrwerksrahmen 6 des Fahrwerks 7 verbunden.

Der Stromabnehmer ist als pneumatisch betätigter Seitenstromabnehmer ausgebildet und ähnelt konstruktiv und funktionell jener Ausführungsvariante eines erfindungsgemäßen Stromabnehmers, welche in Fig. 1 gezeigt ist.

Mittels der ersten Anschlagsanordnung 18 und der zweiten Anschlagsanordnung 19 werden, wie im Zusammenhang mit Fig. 1 beispielhaft beschrieben, Auslenkungen des Gleitstücks 5 begrenzt.

Ein Antrieb 21 der ersten Anschlagsanordnung 18 ist zur Einstellung von Positionen eines elastischen Anschlags 20 der ersten Anschlagsanordnung 18 mit dem Fahrzeugsteuergerät 31 einstellsignalübertragend verbunden. Die zweite Anschlagsanordnung 19 ist konstruktiv und funktionell gleich wie die erste Anschlagsanordnung 18 ausgeführt und ebenfalls mit dem Fahrzeugsteuergerät 31 einstellsignalübertragend verbunden.

Die erste Anschlagsanordnung 18 ist über eine erste Signalleitung 28 mit dem Fahrzeugsteuergerät 31 gekoppelt, die zweite Anschlagsanordnung 19 über eine zweite Signalleitung 29.

Das elektronische Luftfederventil 34 ist über eine dritte Signalleitung 30 mit dem Fahrzeugsteuergerät 31 verbunden.

Über ihre Verbindungen mit dem Fahrzeugsteuergerät 31 sind die erste Anschlagsanordnung 18 und die zweite Anschlagsanordnung 19 justierbar. Liegt das Gleitstück 5 beispielsweise über seine Oberkante an einer in Fig. 2 nicht gezeigten Stromschiene an, so halten die erste Anschlagsanordnung 18 und die zweite Anschlagsanordnung 19 das Gleitstück 5 von unten in einem derartigen Zustand. Es ist auch möglich, dass die erste Anschlagsanordnung 18 und die zweite Anschlagsanordnung 19 so eingestellt sind, dass ein Toleranzabstand zwischen dem Gleitstück 5 und der Stromschiene vorgesehen ist.

Die Stromschiene fungiert als Stromversorgungseinrichtung 4, wie sie beispielhaft in Fig. 1 gezeigt ist.

Um ein Ablegen des Gleitstücks 5 von der Stromschiene zu ermöglichen, können die erste Anschlagsanordnung 18 und die zweite Anschlagsanordnung 19 nach unten von dem Gleitstück 5 abgesetzt werden.

Der Stromabnehmer gemäß Fig. 2 weicht konstruktiv und funktionell geringfügig von der in Fig. 1 dargestellten beispielhaften Ausführungsvariante eines erfindungsgemäßen Stromabnehmers ab. Es ist jedoch auch möglich, jene in Fig. 1 dargestellte beispielhafte Ausführungsvariante eines erfindungsgemäßen Stromabnehmers unverändert in dem Fahrzeug gemäß Fig. 2 einzusetzen.

In dem Fahrzeugsteuergerät 31 ist ein Computerprogrammprodukt 35 implementiert, welches zur Bildung und Übertragung von Einstellbefehlen für die erste Anschlagsanordnung 18 und die zweite Anschlagsanordnung 19 eingerichtet ist.

Über die Einstellbefehle erfolgt für die erste Anschlagsanordnung 18 mittels des Antriebs 21 eine Anpassung von Positionen des Anschlags 20 an einen Radverschleiß des Fahrwerks 7, an einen Verschleiß des Gleitstücks 5 und an eine Abmessung der Stromschiene, an welche das Gleitstück 5 anlegbar ist. Bei der Abmessung der Stromschiene handelt es sich um eine Höhe. Für die zweite Anschlagsanordnung 19 erfolgt mittels der Einstellbefehle eine gleichartige Anpassung.

Hierzu sind in dem Fahrzeugsteuergerät 31 ein erster Zusammenhang zwischen dem Radverschleiß und einem Fahrweg des Fahrzeugs, ein zweiter Zusammenhang zwischen dem Verschleiß des Gleitstücks 5 und dem Fahrweg sowie ein dritter Zusammenhang zwischen der Höhe der Stromschiene und dem Fahrweg gespeichert.

Der erste Zusammenhang und der zweite Zusammenhang sind als Wertepaare, welche Streckenpositionswerte und diesen zugeordnete Rad- und Gleitstückverschleißwerte umfassen, gebildet.

Der dritte Zusammenhang ist als mathematische Funktion gebildet, welche einen Zusammenhang zwischen einer Streckenposition und der Höhe der Stromschiene angibt.

In dem Fahrzeugsteuergerät 31 sind weiterhin Soll-Abstandswerte zwischen dem Gleitstück 5 und der Stromschiene gespeichert (z.B. 0 mm, wenn das Gleitstück 5 an der Stromschiene anliegen soll bzw. ein definierter Abstand zwischen dem Gleitstück 5 und der Stromschiene).

Auf Basis der Soll-Abstandswerte, des ersten Zusammenhangs, des zweiten Zusammenhangs, des dritten Zusammenhangs, von Federungswerten, welche das Fahrzeugsteuergerät 31 über das elektronische Luftfederventil 34 empfängt und welche einen Federungszustand des Fahrzeugs angeben, und von Anschlagsmesswerten einer Wegmesseinrichtung 25 der ersten Anschlagsanordnung 18 und der zweiten Anschlagsanordnung 19, wie sie beispielhaft im Zusammenhang mit Fig. 1 beschrieben ist, welche über die erste Signalleitung 28 und die zweite Signalleitung 29 von dem Stromabnehmer an das Fahrzeugsteuergerät 31 übermittelt werden, werden in dem Fahrzeugsteuergerät 31 Distanzeinstellwerte für die erste Anschlagsanordnung 18 und die zweite Anschlagsanordnung 19 ermittelt und an die erste Anschlagsanordnung 18 und die zweite Anschlagsanordnung 19 übermittelt. Die erste Anschlagsanordnung 18 und die zweite Anschlagsanordnung 19 setzen diese Distanzeinstellwerte um, wodurch das Gleitstück 5 mittels der ersten Anschlagsanordnung 18 und der zweiten Anschlagsanordnung 19 je nach Größe der Distanzeinstellwerte flexibel in seiner Beweglichkeit begrenzt wird.

### Liste der Bezeichnungen

- 1: Betätigungsvorrichtung
- 2: Erster Träger
- 3: Zweiter Träger
- 4: Stromversorgungseinrichtung
- 5: Gleitstück
- 6: Fahrwerksrahmen
- 7: Fahrwerk
- 8: Adapter
- 9: Erste Welle
- 10: Zweite Welle
- 11: Erster Hebel
- 12: Zweiter Hebel
- 13: Verbindungsbolzen
- 14: Stange
- 15: Wellenlager
- 16: Erste Gleitstückfeder
- 17: Zweite Gleitstückfeder
- 18: Erste Anschlagsanordnung
- 19: Zweite Anschlagsanordnung
- 20: Anschlag
- 21: Antrieb
- 22: Hubspindel
- 23: Aufnahme
- 24: Kontaktstück
- 25: Wegmesseinrichtung
- 26: Inkrementalgeber
- 27: Maßstab
- 28: Erste Signalleitung
- 29: Zweite Signalleitung
- 30: Dritte Signalleitung
- 31: Fahrzeugsteuergerät
- 32: Wagenkasten
- 33: Luftfederanordnung
- 34: Luftfederventil
- 35: Computerprogrammprodukt

## Patentansprüche

1. Stromabnehmer für ein Fahrzeug, insbesondere für ein Schienenfahrzeug, mit einer Betätigungsvorrichtung (1), mit einem mit einem Fahrzeug verbindbaren ersten Träger (2) sowie mit einem beweglich mit dem ersten Träger (2) verbundenen, an eine Stromversorgungseinrichtung (4) anlegbaren Gleitstück (5), wobei zwischen dem Gleitstück (5) und dem ersten Träger (2) zumindest eine erste Anschlagsanordnung (18) mit zumindest einem Anschlag (20) zur Begrenzung von Auslenkungen des Gleitstücks (5) angeordnet ist, und wobei die zumindest erste Anschlagsanordnung (18) einen Antrieb (21) zur Verstellung des zumindest einen Anschlags (20) umfasst, **dadurch gekennzeichnet, dass** der Antrieb (21) mit einem Fahrzeugsteuergerät (31), in welchem ein Computerprogrammprodukt (35) implementiert ist, welches zur Bildung von Einstellbefehlen zur Anpassung von Positionen des zumindest einen Anschlags (20) mittels des Antriebs (21) an einen Radverschleiß eines Fahrzeugs, an einen Verschleiß des Gleitstücks (5) oder/und an eine Abmessung einer Stromversorgungseinrichtung (4), an welche das Gleitstück (5) anlegbar ist, eingerichtet ist, verbindbar ist.

2. Stromabnehmer nach Anspruch 1, **dadurch gekennzeichnet, dass** der Antrieb (21) als Elektroantrieb ausgebildet ist.

3. Stromabnehmer nach Anspruch 1, **dadurch gekennzeichnet, dass** der Antrieb (21) als Pneumatikantrieb ausgebildet ist.

4. Stromabnehmer nach Anspruch 1, **dadurch gekennzeichnet, dass** der Antrieb (21) als Hydraulikantrieb ausgebildet ist.

5. Stromabnehmer nach einem der Ansprüche 1 bis 4, **dadurch gekennzeichnet, dass** die zumindest erste Anschlagsanordnung (18) eine Wegmesseinrichtung (25) aufweist.

6. Stromabnehmer nach einem der Ansprüche 1 bis 5, **dadurch gekennzeichnet, dass** der zumindest eine Anschlag (20) mittels des Antriebs (21) stufenlos positionsverstellbar ist.

7. Stromabnehmer nach einem der Ansprüche 1 bis 6, **dadurch gekennzeichnet, dass** das Gleitstück (5) und die zumindest erste Anschlagsanordnung (18) mit einem zweiten Träger (3), welcher mit dem ersten Träger (2) gekoppelt ist, verbunden sind.

8. Stromabnehmer nach einem der Ansprüche 1 bis 7, **dadurch gekennzeichnet, dass** der erste Träger (2) einen Kontaktbereich für den zumindest einen Anschlag (20) aufweist.

9. Fahrzeug mit zumindest einem Stromabnehmer nach einem der Ansprüche 1 bis 8, **dadurch gekennzeichnet, dass** ein Antrieb (21) einer ersten Anschlagsanordnung (18) des zumindest einen Stromabnehmers zur Einstellung von Positionen zumindest eines Anschlags (20) der ersten Anschlagsanordnung (18) mit einem Fahrzeugsteuergerät (31) einstellsignalübertragend verbunden ist.

10. Fahrzeug nach Anspruch 9, **dadurch gekennzeichnet, dass** zwischen einem Fahrwerk (7) des Fahrzeugs und einem Wagenkasten (32) des Fahrzeugs eine Luftfederanordnung (33) des Fahrzeugs angeordnet ist, welche mit dem Fahrzeugsteuergerät (31) verbunden ist.

11. Fahrzeug nach Anspruch 10, **dadurch gekennzeichnet, dass** die Luftfederanordnung (33) zumindest ein elektronisches Luftfederventil (34) aufweist, wobei die Luftfederanordnung (33) über das zumindest eine elektronische Luftfederventil (34) mit dem Fahrzeugsteuergerät (31) verbunden ist.

12. Fahrzeug nach einem der Ansprüche 9 bis 11, **dadurch gekennzeichnet, dass** in dem Fahrzeugsteuergerät (31) ein Computerprogrammprodukt (35) implementiert ist, welches zur Bildung von Einstellbefehlen zur Anpassung der Positionen des zumindest einen Anschlags (20) mittels des Antriebs (21) an einen Radverschleiß des Fahrzeugs, an einen Verschleiß eines Gleitstücks (5) des zumindest einen Stromabnehmers oder/und an eine Abmessung einer Stromversorgungseinrichtung (4), an welche das Gleitstück (5) anlegbar ist, eingerichtet ist.

13. Fahrzeug nach Anspruch 12, **dadurch gekennzeichnet, dass** in dem Fahrzeugsteuergerät (31) ein erster Zusammenhang zwischen dem Radverschleiß und einem Fahrweg, ein zweiter Zusammenhang zwischen dem Verschleiß des Gleitstücks (5) und einem Fahrweg oder/und ein dritter Zusammenhang zwischen der Abmessung der Stromversorgungseinrichtung (4) und einem Fahrweg gespeichert ist/sind.
